# EUROPEAN PATENT APPLICATION

(11) **EP 4 817 385 A1**
(43) Date of publication of application: **07.10.2026**
(21) Application number: 25167319.0
(22) Date of filing: 31.03.2025
(51) Int. Cl.: A01B 76/00

(54) **METHOD AND DATA NETWORK FOR CONTROL AND DATA COMMUNICATION OF AN AGRICULTURAL MACHINE, AND COMPUTER PROGRAM PRODUCT**

(71) Applicant: Kverneland Group Mechatronics B.V., 2153 LR Nieuw-Vennep (NL)
(72) Inventor: STRAVERS, Thomas Jeroen, Nieuw-Vennep (NL)
(74) Representative: Bittner, Thomas L.

(57) **Abstract**

The present disclosure refers to method and data network for control and data communication of an agricultural machine, the method comprising: providing a data network (1) for control and data communication of an agricultural machine comprising an agricultural implement; providing a virtual terminal (4) in the data network (1); connecting the virtual terminal (4) to a data bus (2) of the data network (1); connecting a working set (3) of the agricultural implement to the data bus (2); receiving an object pool of the working set (3) via the data bus (2) in the virtual terminal (4), wherein the object pool comprises a plurality of graphical objects configured to provide a graphical user interface for control of and data communication with the working set (3) in the virtual terminal (4); receiving and storing a locally stored object pool comprising the object pool received in the virtual terminal (4) in a local data storage (7) of the virtual terminal (4); operating the virtual terminal (4), comprising processing the object pool for providing the graphical user interface in the virtual terminal (4); receiving and storing a network stored object pool comprising at least one of the object pool received in the virtual terminal (4) and an equivalent object pool in a network data storage (9) of the data network (1), wherein the equivalent object pool is configured to provide the graphical user interface in the virtual terminal (4); and replicating the graphical user interface for control and data communication of the virtual terminal (4) by a functional module (8) provided in the data network (1) and connected to the data bus (2). The replicating is comprising, in the functional module (8), receiving the network stored object pool; and processing the network stored object pool and generating replication data comprising a replication of the graphical user interface for control and data communication of the virtual terminal (4). The replication data is received in a data processing device (13) unconnected to the data bus (2). Further, a computer program product is provided. (Fig. 1)

## Description

The present disclosure refers to a method and a data network for control and data communication of an agricultural machine having an agricultural implement, and a computer program product.

### Background

With respect to modern agricultural machinery, a data network for control and data communication may be provided, wherein the data network is operable to allow data communication between functional components connected to the data network. At least in part data communication may be conducted via a data bus provided with the data network.

The data network may comprise a virtual terminal (VT), also known as the universal terminal (UT), which provides a standardized graphical user interface for controlling and monitoring agricultural implements. The data network may be complying with the ISO 11783 (ISOBUS). The VT provided in such data network allows operators to manage various tractor-implement interactions through a single display unit, enabling seamless communication between machines from different manufacturers. This interoperability enhances efficiency and simplifies farm operations.

With respect to ISOBUS-based data network, an object pool is provided, the object pool comprising a structured dataset stored in an electronic control unit (ECU). ISO 11783-6 (part of the ISO 11783 standard, also known as ISOBUS) defines the object pool as a structured collection of graphical user interface (GUI) elements or objects used to create the virtual terminal interface for agricultural machinery. The object pool may be provided as a binary file containing a hierarchical structure of graphical objects (e.g., buttons, gauges, sliders, text fields) which dictate the implement's user interface within the VT. It also controls logic governing how an implement (e.g., a plow or sprayer) interacts with the VT in the tractor's cabin. A first version of the object pool is uploaded by the implement when connected to the VT for the first time. The first version may also be referred to as load version. The load version of the object pool is a specific version of the GUI data structure that the implement sends to the VT for display and interaction. It ensures that the correct interface, control elements, and / or functionalities are displayed. A higher or lower version of the object pool which may be uploaded by the implement at later times indicates an updated or modified object pool compared to a previous one or to the load version.

Document US 11,797,007 B2 refers to a method and arrangement for storing and recalling of setting values of a vehicle and / or implement that can be used for agricultural purposes comprising the following steps: inputting of at least one setting value for an actuator of the vehicle and/or implement by a user interface; transmitting of a command based on the setting value to a control unit standing in operational connection with the actuator; and storing of setting data based on the setting value in a memory in order to recall the setting value on the user interface or another user interface as required, wherein the setting value is converted into setting data using meta data regarding technical properties of the vehicle and / or implement, the setting data representing a physical measure of the adjustment of the vehicle and / or implement achieved by the actuator based on the setting value, the measure calculated based on the meta data and the setting value, and the setting data stored together with the meta data.

Document WO 2014 / 179 273 A1 refers to a system and a method for displaying data associated with an embedded system that may include a vehicle data bus, an electronic control unit, and a display unit. The display unit may be configured to render a graphical user interface for the electronic control unit. Data may be exchanged between the electronic control unit and the display unit via the vehicle data bus in partial compliance with a virtual terminal protocol, where full compliance with the virtual terminal protocol requires that the graphical user interface rendered by the display unit be defined and controlled by the electronic control unit. Contrary to the requirement of full compliance with the virtual terminal protocol, the graphical user interface in the display unit may be defined and controlled by the display unit.

Document DE 10 2005 022 476 A1 refers to a data network arrangement for controlling and data communication in an agricultural machine. The network arrangement comprises a data transmission device which may be a data bus to which at least one control unit and a virtual terminal are connected. The control unit serves to control an actuator of the agricultural machine, an attached implement or may connected to a sensor detecting any parameter of the machine, a work tool or the environment. The virtual terminal has a terminal control unit and a display device. When initializing after switching on the network arrangement sends the terminal control unit via the data transmission device a configuration information to the control unit. Based on configuration information, the control unit is processing object sets then sent over the data transmission device to the terminal control unit. The sets of objects are displayed by the terminal control unit in the form of at least one data mask and associated naming data for software definable input means stored.

### Summary

It is an object to provide a method and a data network for control and data communication of an agricultural machine comprising an agricultural implement which provide for improved diagnostics of the operation of the agricultural implement by replication of a virtual terminal.

For solving the problem, a method and data network for control and data communication of an agricultural machine having an agricultural implement according to claims 1 and 13, respectively, are provided. Further, a computer program product according to claim 14 is provided. Additional aspects are referred to in dependent claims.

According to an aspect, a method is provided, comprising: providing a data network for control and data communication of an agricultural machine which is comprising an agricultural implement; providing a virtual terminal in the data network; connecting the virtual terminal to a data bus of the data network; connecting a working set of the agricultural implement to the data bus, the working set comprising one or more electronic control units of the agricultural implement; receiving an object pool of the working set via the data bus in the virtual terminal, wherein the object pool comprises a plurality of graphical objects configured to provide a graphical user interface for control of and data communication with the working set of the agricultural implement in the virtual terminal; receiving and storing a locally stored object pool comprising the object pool received in the virtual terminal in a local data storage of the virtual terminal; operating the virtual terminal, comprising processing the object pool for providing the graphical user interface in the virtual terminal; receiving and storing a network stored object pool comprising at least one of the object pool received in the virtual terminal and an equivalent object pool in a network data storage of the data network, wherein the equivalent object pool is configured to provide the graphical user interface in the virtual terminal; replicating the graphical user interface for control and data communication of the virtual terminal by a functional module provided in the data network and connected to the data bus, the replicating comprising, in the functional module, receiving the network stored object pool; and processing the network stored object pool and generating replication data comprising a replication of the graphical user interface for control and data communication of the virtual terminal; and receiving the replication data in a data processing device unconnected to the data bus.

According to another aspect, a data network for control and data communication of an agricultural machine comprising an implement is provided, wherein the data network comprises a virtual terminal, a functional module, and a data bus connected to the virtual terminal and the functional module. The data network is configured to: connect a working set of the agricultural implement to the data bus, the working set comprising one or more electronic control units of the agricultural implement; receive an object pool of the working set via the data bus in the virtual terminal, wherein the object pool comprises a plurality of graphical objects configured to provide a graphical user interface for control of and data communication with the working set of the agricultural implement in the virtual terminal; receive and storing a locally stored object pool comprising the object pool received in the virtual terminal in a local data storage of the virtual terminal; operate the virtual terminal, comprising processing the object pool for providing the graphical user interface in the virtual terminal; receive and storing a network stored object pool comprising at least one of the object pool received in the virtual terminal and an equivalent object pool in a network data storage of the data network, wherein the equivalent object pool is configured to provide the graphical user interface in the virtual terminal; replicate the graphical user interface for control and data communication of the virtual terminal by a functional module provided in the data network and connected to the data bus, the replicating comprising, in the functional module, receiving the network stored object pool, and processing the network stored object pool and generating replication data comprising a replication of the graphical user interface for control and data communication of the virtual terminal; and receive the replication data in a data processing device unconnected to the data bus.

According to the technical teaching proposed, a network stored object pool is stored in a network data storage of the data network in addition to storing a locally stored object pool in a local data storage assigned to the virtual terminal. The storage of the network stored object pool in the network data storage is different from the local data storage of the virtual terminal and it allows for reconstructing or replicating the graphical user interface independent of the locally stored object pool provided.

The object pool of the working set of the agricultural implement received in the virtual terminal may also be referred to as load or upload version of the object pool of the working set. The object pool received in the virtual terminal is loaded or uploaded from the implement to the virtual terminal. By connecting the functional module to the data bus of the data network, the functional module is operable to send and / or receive data via the data bus. The functional module is operable to submit the replication data to the data processing device, for example, in response to receiving a request for replication of the graphical user interface of the VT from the data processing device.

The working set of the agricultural implement may be connected to the data bus subsequent to connecting the virtual terminal to the data bus.

The object pool of the working set can be received via the data bus in the virtual terminal subsequently or simultaneously to connecting the working set to the data bus.

The working set can be provided by a telematics device of the agricultural implement such as a gateway for agricultural implement.

The network data storage may be provided with one or more storage devices in the data network.

The data network may comprise hardware components or modules such as one or more processors and one or more software applications provided by programming running on the one or more processors. The functional module is provided by software programming in the data network.

Operating the virtual terminal usually comprises outputting video data such as image data representing one or more data masks of the graphical user interface on a display device. The one or more data masks may be created as part of the graphical user interface based on the object pool comprising the plurality of graphical objects.

The equivalent object pool may be an object pool of another working set of another agricultural implement which is different from the agricultural implement. The equivalent object pool is comprising a plurality of graphical objects also operable to provide the graphical user interface for control and data communication with the working set of the agricultural implement in the virtual terminal. For example, the equivalent object pool may be provided by another agricultural implement being of the same type of implement like the agricultural implement for which the object pool was loaded to the virtual terminal. Also, the equivalent object pool may be provided by another agricultural implement being of a different type of implement compared to the agricultural implement. The object pool and the equivalent object pool may be complying with one and the same standardization implemented in the data network, thereby, providing operability of the virtual terminal with the equivalent object pool as well. Thus, the equivalent object pool may also be applied for replicating the graphical user interface of the virtual terminal. The object pool loaded to the virtual terminal and the equivalent object pool may comprise one and the same plurality of (graphical user interface) objects.

After receiving the replication in the data processing device not connected to the data bus of the data network, one or more data masks of the replicated graphical user interface may be output via a display of the data processing device. From the replicated graphical user interface of the virtual terminal a user may gather information, for example, about the implement working correctly or not.

The method may be provided as a computer-implemented method.

The replicating may comprises passively replicating the graphical user interface for control and data communication, wherein the data processing device is blocked from generating a control command configured to control the working set of the agricultural implement. By blocking the data processing device from generating one or more control commands configured to control the working set of the agricultural implement, a passive configuration or design of the replication is provided. While operation of the virtual terminal will comprise receiving, for example, user input for controlling operation of the agricultural implement, such controlling is blocked for the replicated virtual terminal which is only passively replicating the graphical user interface, for example, for diagnostics of the operation of the agricultural implement.

The data processing device may not be allowed to submit any message or command to the data bus ("passively listening only").

The method may be further comprising receiving and storing the network stored object pool in the network data storage in response to firstly connecting the working set of the agricultural implement to the virtual terminal. The network stored object pool may be received and stored in the network data storage subsequently or simultaneously to firstly connecting the working set of the agricultural implement to the virtual terminal. The object pool loaded to and received in the virtual terminal may also be referred to as first load version of object pool. In some embodiments, after having received the first load version of the object pool in the virtual terminal, one or more additional versions of the object pool may be loaded or uploaded to the virtual terminal from the agricultural implement later during operation of the implement. For example, the first load version of the object pool and some later version of the object pool may be different with respect to one or more graphical object from the plurality of graphical objects provided by the object pool.

In some embodiment, the method may be further comprising the following: by the functional model, monitoring data communication via the data bus between the graphical user interface in the virtual terminal and the working set of the agricultural implement while the graphical user interface is operated in the virtual terminal; by the functional model, generating monitoring data from the monitoring of data communication, wherein the monitoring data are indicative of the data communication between the graphical user interface in the virtual terminal and the working set of the agricultural implement; and, by the functional model, processing the monitoring data and the network stored object pool for replicating the graphical user interface for control and data communication of the virtual terminal.

The functional module may be passively monitoring data communication via or on the data bus of the data network. With in the meaning of the present disclosure, the wording "passively monitoring" may refer to the functional model not affecting or influencing the data bus communication. The functional module may be merely "listening to or monitoring" the data bus communication. By means of monitoring data communication, the functional module is operable to retrieve information about the data communication. Following, monitoring data can be generated by the functional model. The monitoring data are indicative of the monitored data communication between the graphical user interface in the virtual terminal and the working set of the agricultural implement and may be comprising, for example, a copy of data communicated between the graphical user interface in the virtual terminal and the working set of the agricultural implement. After gathering the monitoring data, in addition to receiving the network stored object pool, the functional module is operable to process the monitoring data and the network stored object pool for replicating the graphical user interface.

The method may further comprise the following: by the functional model, generating historical monitoring data from the monitoring of data communication between the graphical user interface in the virtual terminal and the working set via the data bus; storing the historical monitoring data in the network data storage of the data network; retrieving the historical monitoring data from the network data storage; and, by the functional model, processing the historical monitoring data and the network stored object pool for replicating the graphical user interface for control and data communication of the virtual terminal.

In such embodiment, in the process of replicating or reconstructing the graphical user interface the functional module is operable, for example, to replay historical data related to the interaction or data communication between the graphical user interface in the virtual terminal and the working set of the implement. Such operation may facilitate a more complex analysis of data communication between the virtual terminal and the implement, for example, facilitating diagnostics, operator training and / or performance evaluation. Prior to being processed by the functional module, the historical monitoring data is stored in the network data storage from which it can be retrieved for replication of the graphical user interface of the virtual terminal.

The method may further comprise: by the functional model, generating present monitoring data from the monitoring of data communication between the graphical user interface in the virtual terminal and the working set via the data bus; and, by the functional module, processing the present monitoring data and the network stored object pool for replicating the graphical user interface for control and data communication of the virtual terminal. Present monitoring data may refer to monitoring data generated by the functional model from the monitoring of data communication between the graphical user interface in the virtual terminal and the working set via the data bus which is provided in the functional module without storing the present monitoring data in the network data storage before. The functional module may be operable to replicate the graphical user interface in a live operation mode by processing the present monitoring data received.

The receiving and storing of the network stored object pool may comprise receiving the object pool in the network data storage from the virtual terminal via the data bus. For providing the object pool in the network stored object pool in the network data storage, the object pool received in the virtual terminal is transmitted to the network data storage via the data bus. For example, a copy of the object pool received in the virtual terminal may be transmitted to the network data storage through the data bus.

The receiving and storing of the network stored object pool may further comprise receiving the equivalent object pool in the network data storage from an external device which is external to the data network and which is connectable to the data network for data communication by a data communication connection. The external device is provided separately from the agricultural machine and the data network. The external device, for example, may be a working set comprising one or more electronic units of another agricultural machine having another implement. The other implement, for example, being of the same type of implement like the agricultural implement may be operable to provide the equivalent object pool comprising also the plurality of graphical objects provided in the object pool of the agricultural implement. Thus, the equivalent object pool may be applied or processed for replicating the graphical user interface of the virtual terminal of the data network. Because of being external, the external device is not connected to the data bus and will be operable to provide the equivalent object pool to the data network via the data communication connection, which may be operable for wired and/or wireless data communication.

The receiving of the network stored object pool by the data processing device may further comprise the following: the functional module is determining one or more graphical objects missing in the network stored object pool; and the functional module is adding the one or more missing graphical objects in the network stored object pool.

In such embodiment, the functional module is operable to analyze and check the network stored object pool prior to processing the network stored object pool for replication of the graphical user interface, thereby, ensuring that a correct working object pool is applied for replication of the graphical user interface of the virtual terminal. If the functional module determines that the network stored object pool is missing a graphical object necessary for replicating the graphical user interface, the functional module is operable to add such missing graphical object. For example, the missing graphical object may be retrieved by the functional module from data not actually transmitted via the data bus, but representing the missing graphical objects.

Manufacturers or service providers may store standardized object pool templates for different machine models. Enables retrieving or reconstructing missing object pools based on the manufacturer's predefined data.

Further, the data bus may be provided with a serial data bus complying with CAN bus standard. CAN is defined in ISO11898-1.

The method may further comprise receiving and storing another network stored object pool comprising the object pool received in a virtual terminal, wherein the other network stored object pool is received before in another network data storage of another data network provided separately from the data network for control and data communication of the agricultural machine. In such embodiment, another or additional network stored object pool is provided which also allows for replication of the graphical user interface of the virtual terminal. But, the other or additional network stored object pool is firstly stored in another data network provided separately from the data network of the agricultural machine. The other network stored object pool can comprise for example AEF standards or other standards, knowledge data, and / or sensors data. Following, the other network stored object pool may be provided to the functional module. For example, the other data network may comprise a data processing device such as a server device assigned to a service center of a manufacturer and / or data processing device such as a server device assigned to a service provider providing support for agricultural machinery. In some embodiment, the other network stored object pool may provide for the equivalent object pool.

The method may be further comprising, in the functional module: receiving request for changing language of text assigned to one or more graphical objects of the graphical user interface to a user-selected language; generating amended replication data comprising an amended replication of the graphical user interface for control and data communication of the virtual terminal, wherein the one or more graphical objects of the graphical user interface is assigned text in the user-selected language; and receiving the amended replication data in the data processing device unconnected to the data bus.

In some embodiments, object pools may be dynamically provided in an additional data storage. Such object pools may allow for amending or changing language of text assigned to objects or data masks of the graphical user interface of the replicated virtual terminal, for example, in response to receiving a user request for changing language in the external device before. Such request may be provided to the functional module which in response will amend replication of the graphical user interface of the virtual terminal accordingly. By this embodiment dynamically real-time language translation may be implemented by the method.

The data network may be provided with a network design complying with the standard ISO 11783. ISO 11783 as whole specifies a serial data network for control and communication in agricultural machines comprising tractors, mounted, semi-mounted, towed or self-propelled implements. It is standardizing the method and format of transfer of data with respect to agricultural machines, for example, between sensor, actuators, control elements, information storage and display units whether mounted or part of the tractor, or any implement. With respect to the virtual terminal, ISO11783 also provides standardization.

With respect to the data network for control and data communication of the agricultural machine having the implement and the computer program product, respectively, the aspects disclosed above with respect to the method may apply *mutatis mutandis.* The agricultural machine may comprise at least one of mounted, semi-mounted, towed and self-propelled implement. Also, the agricultural machine may comprise a tractor, wherein the virtual terminal is running on a hardware component provided with the tractor.

### Description of further embodiments

Following, additional embodiments are disclosed by referring to figures. In the figures, show:
- Fig. 1: a schematic block diagram of an arrangement comprising a data network for control and data communication of an agricultural machine having an implement;
- Fig. 2: a schematic representation of a method for replicating a virtual terminal, specifically a graphical user interface of the virtual user terminal in the data network of Fig. 1;
- Fig. 3: a schematic block diagram of another arrangement comprising a data network for control and data communication of an agricultural machine having an implement; and
- Fig. 4: a schematic representation of a method for replicating a virtual terminal, specifically a graphical user interface of the virtual user terminal in the data network of Fig. 3.

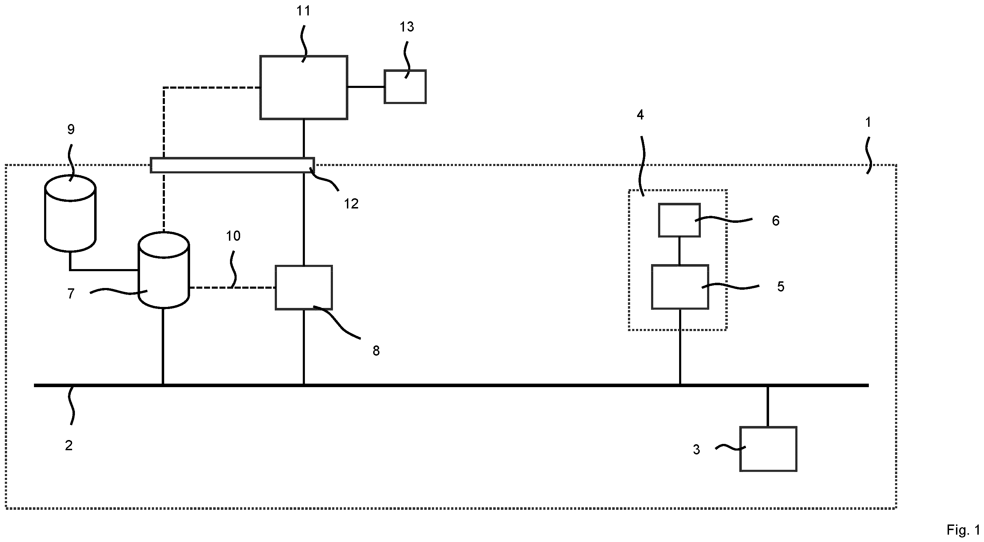

Referring to Fig. 1, a schematic block diagram of an arrangement comprising a data network 1 of agricultural machine having an agricultural implement is shown. In the data network 1 a data bus 2 is provided for data communication. The data network 1 may be provided with an implementation complying with the standard ISO11783. The data bus may be provided as a serial data bus complying with CAN bus (CAN - Controller Area Network) standard.

A working set 3 comprising one or more electronic units of the implement is connected to the data bus 2. Similarly, a virtual terminal (VT) 4 preferably implemented according to the standard ISO11783 is connected for data communication to the data bus 2. The virtual terminal 4 which may also be referred to as user terminal (UT) is provided with a display device 5 and a data processing unit 6. Also, a local data storage 7 of the virtual terminal 4 is provided, wherein the local data storage 7 is connected to the data bus 2.

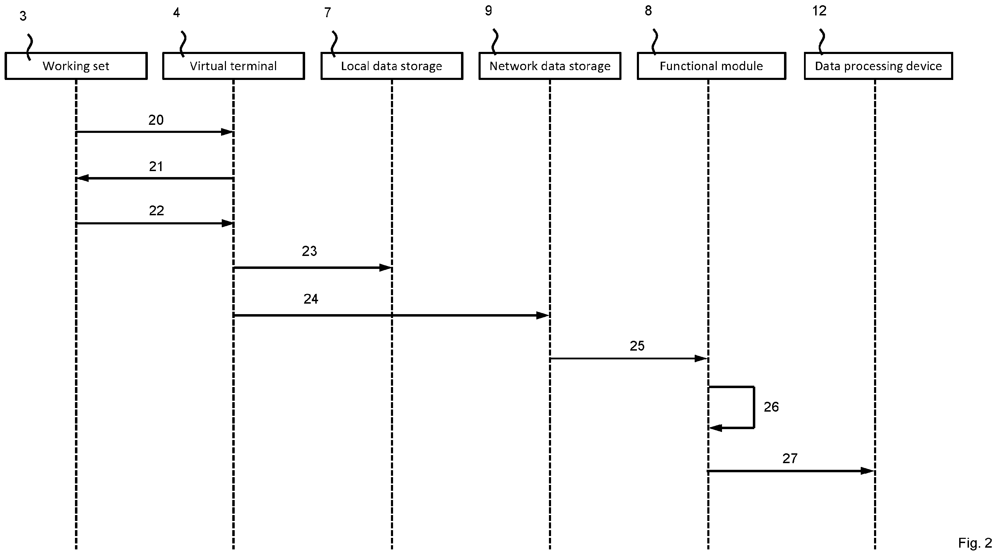

Fig. 2 shows a schematic representation of a method for replicating the virtual terminal 4, specifically a graphical user interface of the virtual user terminal 4 in the data network 1.

Operation capabilities of the virtual terminal 4 may include but are not limited to graphical display capabilities (e.g., screen resolution, color depth), supported input methods (e.g., touchscreen, button-based), communication protocol and data handling (e.g., ISOBUS compatibility, message buffering), object pool limitations (e.g., max number of graphical objects), processing and memory constraints (e.g., ability to handle complex graphical user interfaces), multitasking and parallel execution (e.g., running multiple working sets), and software version and compatibility (e.g., firmware version, back-ward compatibility) and / or language support (e.g., availability of multiple user interfaces languages).

If the working set 3 is firstly connecting to the virtual terminal 4 via the data bus 2, it will provide a request for information about operation capabilities of the virtual terminal (Step 20). In Step 21 the virtual terminal 4 is informing the working set 3 about its operation capabilities by responding to the request received before.

A first load version of an object pool of the working set 3 is loaded to and received by the virtual terminal 4 in Step 22. The object pool of the working set 3 comprises a plurality of graphical objects configured or processable to provide a graphical user interface for control of and data communication with the working set 3 of the implement in the virtual terminal 4. For example, the object pool may be a binary file containing a hierarchical structure of graphical objects such as button, sliders, text fields and the like. It allows for creating one or more data masks to be outputted as part of the graphical user interface on the display device 5, such as a display device on a tractor of the agricultural machine or the implement.

After the first load version of the object pool has been received in the virtual terminal 4, the first load version of the object pool is stored as a locally stored object pool in the local data storage 7 assigned to the virtual terminal 4 (Step 23). The locally stored object pool may be a copy of the first load version of the object pool received in the virtual terminal 4.

In addition, by means of a functional module 8 connected to the data bus 2, a network stored object pool comprising the first load version of the object pool is stored subsequently or simultaneously in a network data storage 9 provided in the data network 1 (Step 24). The network stored object pool may be a copy of the first load version of the object pool received in the virtual terminal 4. The network data storage 9 is provided separately from the local data storage 7 of the virtual terminal 4. For transmitting the object pool from the virtual terminal 4 to the network data storage 9, data representing the object pool may be transmitted through a communication connection 10 of the data network 1 provided separately from the data bus 3.

For replicating the virtual terminal 4, specifically the graphical user interface of the virtual terminal 4, the functional module 8 will process the network stored object pool stored in the network storage 9 after the functional module 8 was receiving the network stored object pool (Step 25). The communication between the network data storage 9 and the functional model 8 may be exclusively over the communication connection 10. This will allow for replication of the graphical user interface of the virtual terminal 4 even without having transmitted the object pool of the working set 3 via the data bus 2 at the time of replication. For such replication, the functional module 8 relies on the network stored object pool from the network storage 9.

The functional module 8 generates replication data representing replication of the graphical user interface of the virtual terminal 4, such generating comprising processing of the networked stored object pool received (Step 26). The replication data may be transmitted to an external data processing device 11 via a network interface 12 (Step 27). The external data processing device 11 being external with respect to the data network 1 can exchange data with data network 1 via the network interface 12. The network interface 12 can be a WebSocket. WebSocket is a computer communication protocol, providing a simultaneous two-way communication channel over a single Transmission Control Protocol (TCP) connection.

After receiving the replication data in the external data processing device 12 which may be provided, for example, by a laptop or mobile phone the replicated graphical user interface of the replicated virtual terminal 4 may be outputted via an external display device 13 of the external data processing device 12. Specifically, one or more data masks of the replicated graphical user interface may be presented on the external display device 13. The external data processing device 11 may be referred to as virtual terminal replicator.

The replication of the virtual terminal 4 may comprise processing present and or historical monitoring data generated by the functional model 8 from passively monitoring data communication between the graphical user interface of the virtual terminal 4 and the working set 3 via the data bus 2.

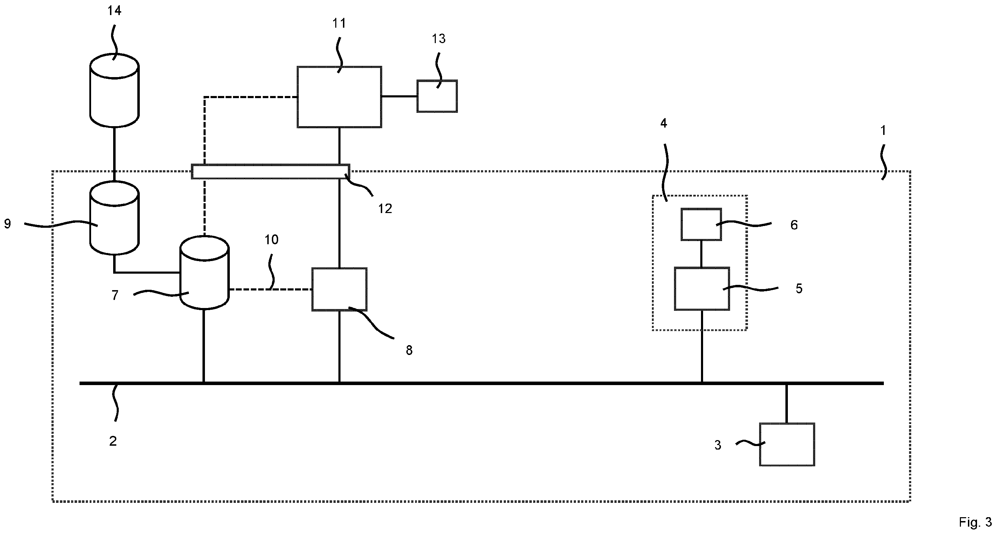

Referring to Fig. 3, a schematic block diagram of a further embodiment of an arrangement comprising the data network 1 of agricultural machine having an agricultural implement is shown. With respect to Fig. 3, the same reference numerals have been assigned to the same objects as in Fig. 1.

An additional or further data storage 14 is provided which may be implemented as part of the data network 1 (providing for another data network storage) or outside the data network 1 in another data network (not shown). For example, the other data network may comprise a data processing device such as a server device assigned to a service center of a manufacturer and/or data processing device such as a server device assigned to a service provider providing support for agricultural machinery.

The additional data storage 14 is dynamically receiving object pools via the data bus 2, wherein the object pools are the same or different from the locally stored object pool. The dynamically received object pools are stored in the additional data storage 14. The object pools received and stored in the additional data storage 14, in some example, may be referred to as other network stored object pools. The other network stored object pools can comprise for example AEF standards or other standards, knowledge data, and / or sensors data.

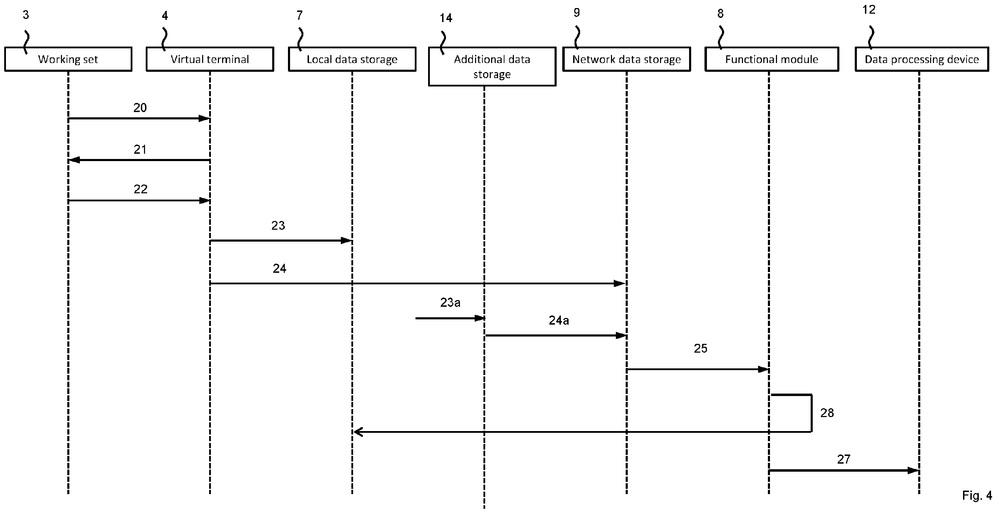

Fig. 4 shows a schematic representation of a further embodiment of a method for replicating the virtual terminal 4, specifically a graphical user interface of the virtual user terminal 4 in the data network 1. With respect to Fig. 4, the same reference numerals have been assigned to the same steps as in Fig. 2.

In Step 23a, the additional data storage 14 is dynamically receiving object pools via the data bus 2, wherein the object pools are the same or different from the locally stored object pool.

Referring to Step 24a, the network data storage 9 is receiving data representing one or more of the object pools stored before in the additional data storage 14. The functional module 8 will process the network stored object pool including the object pool received in Step 24a and provide it to the local data storage (Step 28).

In some embodiments, dynamically providing the object pools to the additional data storage 14 may allow for amending or changing language (for example, form English to Dutch) of text assigned to one or more objects or data masks of the graphical user interface of the replicated virtual terminal and / or the virtual terminal 4, for example, in response to receiving a user request for changing language in the external device 13 or the virtual terminal 4. Such request may be provided to the functional module 8 which in response, in some embodiment, may amend replication of the graphical user interface of the virtual terminal 4 accordingly. By this embodiment dynamically real-time language translation may implemented by the method disclosed.

The proposed technology addresses a common challenge faced by operators: the need to access historical data without disrupting live data communication. By combining real-time data streaming with historical data storage, it offers a seamless experience for the user, where they can easily pause, rewind, and replay machine data at any time without interfering with the ongoing operations. A dual-mode operation may be provided: real-time data and pausing for historical data access. In dual-mode operation the system may operate in two distinct phases to ensure continuous, uninterrupted communication while enabling full access to past data. The functional module 8 may be operable to monitor live data flowing over the data bus 2 and to store it in at least one of the local data storage 7 and the network storage 9. This allows for a constant, real-time stream of data that can be monitored and analyzed as it occurs. Simultaneously, key data snapshots may captured and stored, ensuring that no critical information is lost, even during high-paced operations.

While the live data stream on the data bus 2 continues uninterrupted, also access to historical data transmitted via the data bus 2 may be provided. By the functional module, machine states, error logs, and other critical operational data may be continuously tracked and stored. This creates a full, on-demand history of the performance of the working set 3 without needing any direct interaction with the data bus 2 or interrupting the live data feed.

In the replicated graphical user interface, this allows operators to pause, rewind, and replay previous data points or error logs, enabling them to review critical moments of machine performance and troubleshoot without disrupting the real-time communication. The ability to access this historical data is particularly valuable when diagnosing intermittent issues or performing predictive maintenance, as operators can trace back through the timeline of machine states.

Beyond the real-time data and historical data, the functional module 8 may be operable to collect data indicative of load versions of the data object pool, which may comprise data that may not even appear on the data bus 2. This allows to provide a more holistic view of the performance of the working set, incorporating additional data sources that are typically difficult to monitor.

The proposed technology provides a secure distributed system that enables remote access while ensuring data integrity. By decoupling object pool retrieval from live communication on data bus 2, several technical advantages are achieved. Enhanced data reliability and completion is accomplished. Unlike conventional mirroring of virtual terminal, which relies on real-time streaming, the method proposed allows for reconstruction of the graphical user interface from the network stored object pool. This ensures greater data robustness and prevents data loss due to communication failures or transient unavailability of the data bus 2.

Further, improved flexibility is provided for operators. The graphical user interface can be reloaded at any time, even without a new implement connection. This allows seamless access to implement settings, diagnostics, and configurations, reducing downtime and enhancing operational efficiency.

The features disclosed in this specification, the figures and / or the claims may be material for the realization of various embodiments, taken in isolation or in various combinations thereof.

## Claims

1. A method, comprising:
- providing a data network (1) for control and data communication of an agricultural machine comprising an agricultural implement;
- providing a virtual terminal (4) in the data network (1);
- connecting the virtual terminal (4) to a data bus (2) of the data network (1);
- connecting a working set (3) of the agricultural implement to the data bus (2), the working set (3) comprising one or more electronic control units of the agricultural implement;
- receiving an object pool of the working set (3) via the data bus (2) in the virtual terminal (4), wherein the object pool comprises a plurality of graphical objects configured to provide a graphical user interface for control of and data communication with the working set (3) of the agricultural implement in the virtual terminal (4);
- receiving and storing a locally stored object pool comprising the object pool received in the virtual terminal (4) in a local data storage (7) of the virtual terminal (4);
- operating the virtual terminal (4), comprising processing the object pool for providing the graphical user interface in the virtual terminal (4);
- receiving and storing a network stored object pool comprising at least one of the object pool received in the virtual terminal (4) and an equivalent object pool in a network data storage (9) of the data network (1), wherein the equivalent object pool is configured to provide the graphical user interface in the virtual terminal (4);
- replicating the graphical user interface for control and data communication of the virtual terminal (4) by a functional module (8) provided in the data network (1) and connected to the data bus (2), the replicating comprising in the functional module (8):
- receiving the network stored object pool; and
- processing the network stored object pool and generating replication data comprising a replication of the graphical user interface for control and data communication of the virtual terminal (4); and
- receiving the replication data in a data processing device (13) unconnected to the data bus (2).

2. Method of claim 1, wherein the replicating comprises passively replicating the graphical user interface for control and data communication, comprising blocking the data processing device (13) from generating a control command configured to control the working set (3) of the agricultural implement.

3. Method of claim 1 or 2, further comprising receiving and storing the network stored object pool in the network data storage (9) in response to firstly connecting the working set (3) of the agricultural implement to the virtual terminal (4).

4. Method of at least one of the preceding claims, further comprising:
- by the functional model, monitoring data communication via the data bus (2) between the graphical user interface in the virtual terminal (4) and the working set (3) of the agricultural implement while the graphical user interface is operated in the virtual terminal (4);
- by the functional model, generating monitoring data from the monitoring of data communication, wherein the monitoring data are indicative of the data communication between the graphical user interface in the virtual terminal (4) and the working set (3) of the agricultural implement; and
- by the functional model, processing the monitoring data and the network stored object pool for replicating the graphical user interface for control and data communication of the virtual terminal (4).

5. Method of claim 4, further comprising:
- by the functional model, generating historical monitoring data from the monitoring of data communication between the graphical user interface in the virtual terminal (4) and the working set (3) via the data bus (2);
- storing the historical monitoring data in the network data storage (9) of the data network (1);
- retrieving the historical monitoring data from the network data storage (9); and
- by the functional model, processing the historical monitoring data and the network stored object pool for replicating the graphical user interface for control and data communication of the virtual terminal (4).

6. Method of claim 4 or 5, further comprising:
- by the functional model, generating present monitoring data from the monitoring of data communication between the graphical user interface in the virtual terminal (4) and the working set (3) via the data bus (2); and
- by the functional model, processing the present monitoring data and the network stored object pool for replicating the graphical user interface for control and data communication of the virtual terminal (4).

7. Method of at least one of the preceding claims, wherein the receiving and storing of the network stored object pool comprises receiving the object pool in the network data storage (9) from the virtual terminal (4) via the data bus (2).

8. Method of at least one of the preceding claims, wherein the receiving and storing of the network stored object pool comprises receiving the equivalent object pool in the network data storage (9) from an external device external to the data network (1) and connectable to the data network (1) for data communication by a data communication connection.

9. Method of at least one of the preceding claims, wherein the receiving of the network stored object pool further comprises, by the functional module (8):
- determining one or more graphical objects missing in the network stored object pool; and
- adding the one or more missing graphical objects to the network stored object pool.

10. Method of at least one of the preceding claims, further comprising providing the data bus (2) with a serial data bus (2) complying with CAN bus standard.

11. Method of at least one of the preceding claims, further comprising receiving and storing another network stored object pool comprising the object pool received in the virtual terminal (4), wherein the other network stored object pool is received before in another network data storage (9) of another data network (1) provided separately from the data network (1) for control and data communication of the agricultural machine.

12. Method of at least one of the preceding claims, further comprising, in the functional module (8):
- receiving request for changing language of text one or more graphical objects of the graphical user interface to a user-selected language;
- generating amended replication data comprising an amended replication of the graphical user interface for control and data communication of the virtual terminal (4), wherein the one or more graphical objects of the graphical user interface is assigned text in the user-selected language; and
- receiving the amended replication data in the data processing device (13) unconnected to the data bus (2).

13. A data network (1) for control and data communication of an agricultural machine having an agricultural implement, the data network (1) comprising a virtual terminal (4), a functional module (8), and a data bus (2) connected to the virtual terminal (4) and the functional module (8), wherein the data network (1) is configured to:
- connect a working set (3) of the agricultural implement to the data bus (2), the working set (3) comprising one or more electronic control units of the agricultural implement;
- receive an object pool of the working set (3) via the data bus (2) in the virtual terminal (4), wherein the object pool comprises a plurality of graphical objects configured to provide a graphical user interface for control of and data communication with the working set (3) of the agricultural implement in the virtual terminal (4);
- receive and storing a locally stored object pool comprising the object pool received in the virtual terminal (4) in a local data storage (7) of the virtual terminal (4);
- operate the virtual terminal (4), comprising processing the object pool for providing the graphical user interface in the virtual terminal (4);
- receive and storing a network stored object pool comprising at least one of the object pool received in the virtual terminal (4) and an equivalent object pool in a network data storage (9) of the data network (1), wherein the equivalent object pool is configured to provide the graphical user interface in the virtual terminal (4); and
- replicate the graphical user interface for control and data communication of the virtual terminal (4) by a functional module (8) provided in the data network (1) and connected to the data bus (2), the replicating comprising in the functional module (8):
- receiving the network stored object pool; and
- processing the network stored object pool and generating replication data comprising a replication of the graphical user interface for control and data communication of the virtual terminal (4); and
- receive the replication data in a data processing device (13) unconnected to the data bus (2).

14. A computer program product comprising instructions which, when the program is executed by a computer, cause the computer to carry out the method of claim 1.
